# EUROPEAN PATENT APPLICATION

(11) **EP 4 786 219 A1**
(43) Date of publication of application: **05.08.2026**
(21) Application number: 24870593.1
(22) Date of filing: 20.09.2024
(51) Int. Cl.: B60H 1/00, B60H 1/34

(54) **AIR CONDITIONING MODULE AND VEHICLE**

(30) Priority: 28.09.2023 CN 202311290020
(71) Applicant: Valeo Electrification, 95800 Cergy Pontoise (FR)
(72) Inventor: XIAO, Ju, Jingzhou, Hubei 434000 (CN); BAO, Tao, Jingzhou, Hubei 434000 (CN)
(74) Representative: Valeo Powertrain Systems
(86) International application number: PCT/CN2024/119929
(87) International publication number: WO 2025/067049

(57) **Abstract**

The present disclosure provides an air conditioning module, comprising a housing and an air door, wherein he housing comprises a main casing, and the rotation axis of the air door is rotatably arranged on the main casing. The air conditioning module further comprises: a rod member slidably arranged on the main casing; and a driven member arranged on the rotation axis of the air door, wherein the driven member is slidably engaged with the rod member so as to be driven by the rod member when the rod member slides, and then the air door is driven to rotate on the main casing. The present disclosure further provides a vehicle comprising the air conditioning module.

## Description

### Technical Field

The present disclosure relates to an air conditioning module and a vehicle comprising this air conditioning module.

### Background Art

In an air conditioning system of a vehicle, multiple air flaps are typically provided, and the different air flaps are linked to each other, to ensure synchronous opening of the air flaps, and may cause blades of the air flaps to be in different opening states. Typically, the air conditioning system comprises a flap driving device to realize the above functions. Known flap driving devices comprise a rotary plate and a connecting rod mechanism that moves in a track groove and is connected to different air flaps. However, the design of such a rotary plate has larger space requirements, and it is difficult to ensure that a pressure angle meets design standards in a limited space. In addition, known flap driving devices have a complex structure and are difficult to implement.

### Summary of the Invention

Therefore, an objective of the present disclosure is to provide an air conditioning module and a vehicle comprising this air conditioning module, the structure of the air conditioning module being simple and compact, therefore reducing space requirements.

The abovementioned objective is achieved through an air conditioning module for a vehicle, and a vehicle, which are described below.

The present disclosure provides an air conditioning module, comprising a casing and an air flap, the casing comprising a main housing; a rotary shaft of the air flap is rotatably arranged on the main housing; the air conditioning module further comprises: a rod member, which is slidably arranged on the main housing; and a driven member, which is arranged on the rotary shaft of the air flap; the driven member is slidably joined to the rod member, so as to be driven by the rod member when the rod member slides, thereby driving the air flap to rotate on the main housing.

In an embodiment, the rod member is provided with a track groove, and the driven member comprises a sliding pin that is able to slide in the track groove, and the sliding pin is fixed to the rotary shaft of the air flap.

In an embodiment, the casing comprises a positioning element that is arranged on the main housing, and the positioning element is slidably supported on the rod member, wherein the positioning element is arranged between the rod member and the main housing.

In an embodiment, a positioning groove that receives the positioning element is provided on the rod member.

In an embodiment, the positioning groove extends along an extension axis of the rod member.

In an embodiment, the positioning groove is arranged at two opposite side edges of the rod member in a direction that is perpendicular to the extension axis of the rod member.

In an embodiment, the air conditioning module further comprises a drive wheel; the drive wheel is rotatably arranged on the main housing, and is in transmission connection with the rod member, to drive the rod member to slide on the main housing.

In an embodiment, the casing is provided with a casing limiting part that is arranged on the main housing, and the casing limiting part slidably abuts the rod member, wherein the casing limiting part and the drive wheel are respectively arranged at two sides of the rod member, to clamp the rod member.

In an embodiment, the drive wheel and at least two of the casing limiting parts are respectively located at three vertices of a triangle.

In an embodiment, the rod member is provided with a rack part, and the rack part is provided with teeth that engage with the drive wheel.

In an embodiment, the drive wheel is provided with a wheel limiting part, and the rack part is arranged between the main housing and the wheel limiting part; the wheel limiting part is used for abutting the rack part in a direction toward the main housing.

In an embodiment, at least one of the casing limiting parts comprises an L-shaped element, one arm of the L-shaped element being connected to the main housing, and the other arm, outside the main housing, being hooked onto the rod member in a direction toward the main housing.

In an embodiment, the wheel limiting part is a protruding part that extends radially from an outer edge of the drive wheel.

The present disclosure further provides a vehicle, comprising the air conditioning module described above.

The embodiments of the present disclosure have the following advantages: by means of cooperation of a rod member provided with a rack part and a driven member, translational motion is converted into rotational motion, and therefore an air flap may be opened and closed and modes switched; by means of various limiting parts, it may be ensured that the rod member does not deviate from a movement path thereof, and therefore stable driving of the air flap may be ensured; and a mechanical structure thereof is simple, and therefore the structure is compact and has lower space requirements.

### Brief Description of the Drawings

A better understanding of the advantages and objective of the present disclosure can be gained from the preferred embodiments of the present disclosure described in detail below with reference to the drawings. To better illustrate the relationships among components in the drawings, the drawings are not drawn to scale. In the drawings:
Fig. 1 shows a schematic drawing of an air conditioning module for a vehicle according to an embodiment of the present disclosure;
Fig. 2 shows a schematic drawing of a portion of an air conditioning module according to an embodiment of the present disclosure;
Fig. 3 shows a schematic drawing of a portion of an air conditioning module with an electric motor removed according to an embodiment of the present disclosure;
Fig. 4 shows a schematic drawing of a portion of an air conditioning module with a rod member removed according to an embodiment of the present disclosure;
Fig. 5 shows a schematic drawing of one side of a rod member of an air conditioning module that faces a main housing, and a drive wheel according to an embodiment of the present disclosure; and
Fig. 6 shows a schematic drawing of a drive wheel of an air conditioning module according to an embodiment of the present disclosure.

### Detailed Description of the Invention

In order to clarify the objective, technical solution and advantages of the present disclosure, the technical solution of embodiments of the present disclosure is described clearly and completely below in conjunction with the drawings accompanying particular embodiments of the present disclosure. In the drawings, identical reference numerals denote identical components. It must be explained that the embodiments described are some, not all, of the embodiments of the present disclosure. All other embodiments obtained by those skilled in the art based on the described embodiments of the present disclosure without the need for inventive effort shall fall within the scope of protection of the present disclosure.

Unless otherwise defined, the technical or scientific terms used herein shall have the common meanings understood by those skilled in the art. The words "first", "second", and the like used in the description and claims of the patent application disclosed herein do not indicate any order, quantity or importance, being merely used to distinguish different component parts. Likewise, words such as "a" or "one" do not necessarily represent a quantity limit. Words such as "comprising", "including" or "having" mean that the element or object preceding the word covers the elements or objects and equivalents thereof listed after the word, without excluding other elements or objects. Words such as "connection" or "communication", rather than being limited to the physical or mechanical connection or communication shown in a drawing, may include connection or communication equivalent thereto, irrespective of whether it is direct or indirect. "Upper", "lower", "left", "right", etc. are merely used to indicate a relative positional relationship; when the absolute position of a described object changes, the relative positional relationship may also change accordingly.

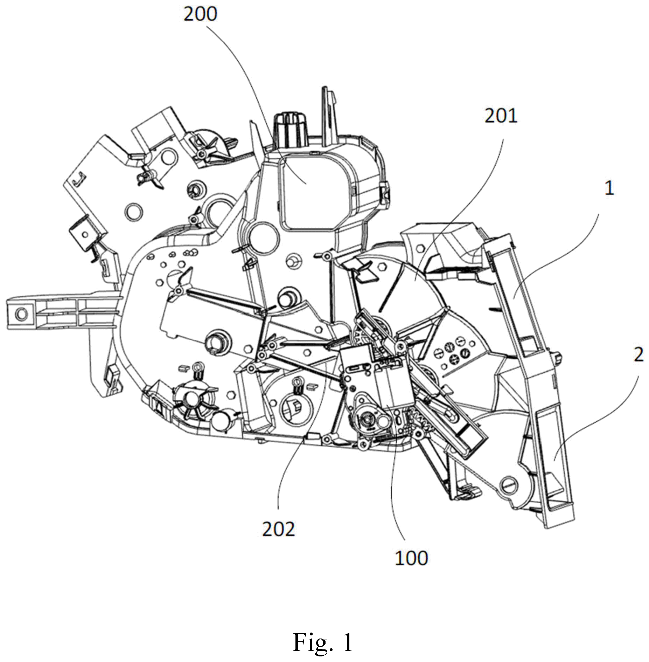

Various embodiments of the present disclosure will be described in detail below with reference to Figs. 1 to 6.

As shown in Fig. 1, an air conditioning module 200 comprised by a vehicle of the present disclosure comprises a casing 201 and an air flap 1, 2. The casing 201 is mounted inside the vehicle; a passage for air to circulate is provided therein, and the casing is optionally provided with an evaporator for cooling air, a heater core for heating air, and a mixing mechanism for mixing cold air and warm air according to a specified mixing ratio, etc. Fig. 1 shows two air flaps 1, 2, but the present disclosure does not limit the number thereof.

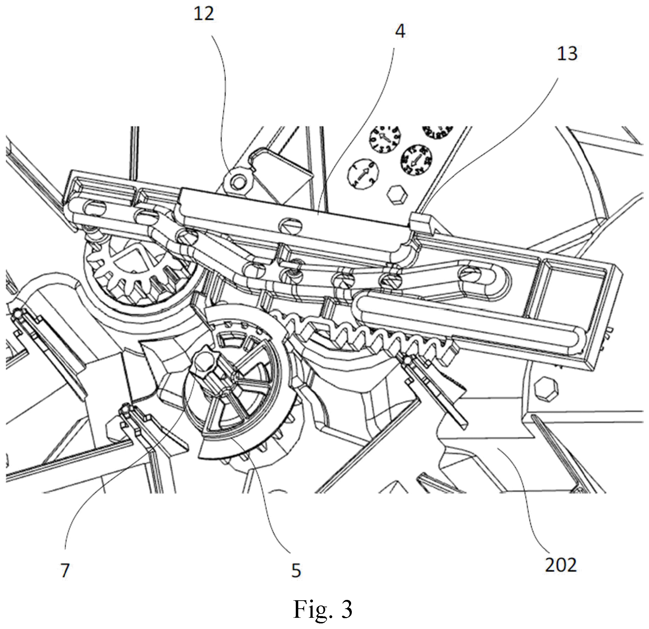

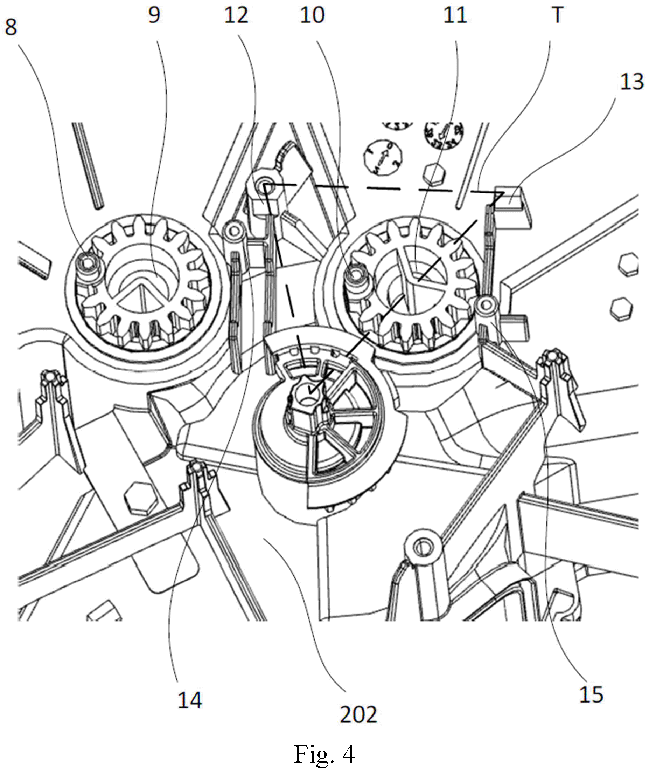

As shown in Fig. 1, the casing 201 comprises a main housing 202. As shown in Figs. 3 and 4, respective rotary shafts 9, 11 of the two air flaps 1, 2 are rotatably arranged on the main housing 202.

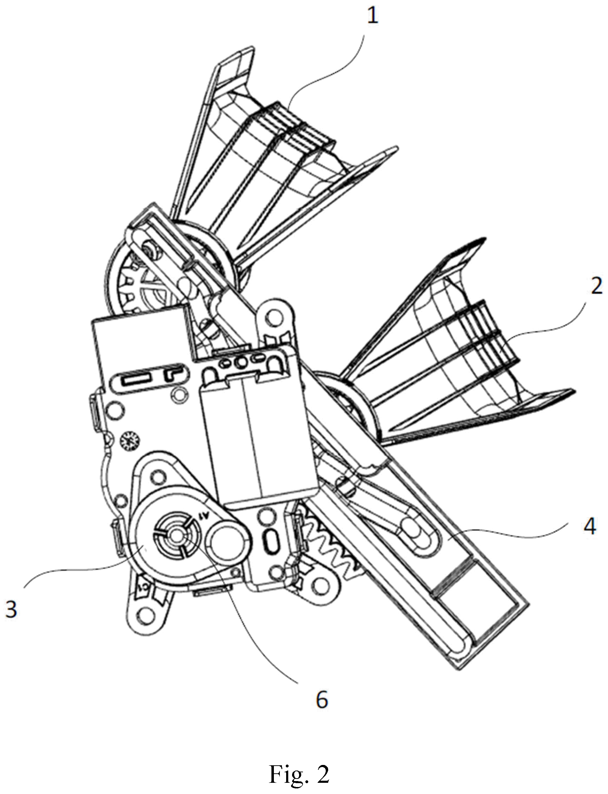

As shown in Figs. 2 to 4, the air conditioning module 200 further comprises a rod member 4 and a driven member. The rod member 4 is slidably arranged on the main housing 202. The driven member is arranged on the rotary shaft 9, 11 of the air flap 1, 2. The driven member is slidably joined to the rod member 4, so as to be driven by the rod member 4 when the rod member 4 slides, thereby driving the air flap 1, 2 to rotate on the main housing 202. The air flap is rotated by means of translational motion in the present disclosure.

In addition, as shown in Fig. 3, the air conditioning module 200 further comprises an electric motor 3, which comprises an electric motor output shaft. Further referring to Fig. 1, the electric motor 3 is arranged in an electric motor housing 100, the electric motor housing 100 being arranged on a side face of the main housing 202.

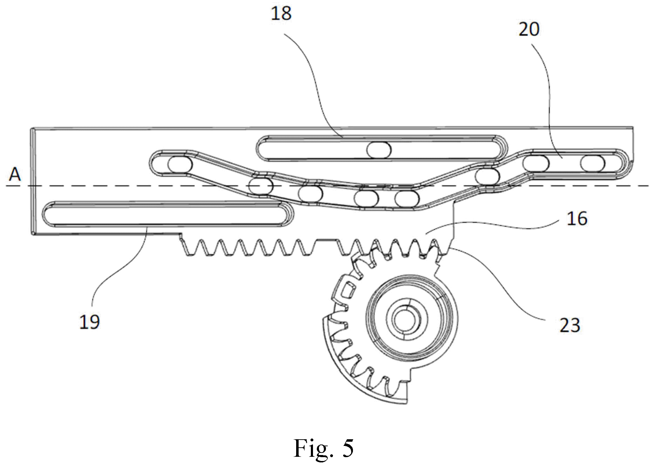

As shown in Fig. 5, the rod member 4 is provided with a track groove 20. As shown in Figs. 3 to 4, the driven member comprises a sliding pin 8, 10 that is able to slide in the track groove 20, and the sliding pin 8, 10 is fixed to the rotary shaft 9, 11 of the air flap 1, 2. Specifically, the sliding pin 8 is fixed to the rotary shaft 9 of the air flap 1, and the sliding pin 10 is fixed to the rotary shaft 11 of the air flap 2. The rotary shafts 9, 11 are each provided with a gear mechanism, and the sliding pins 8, 10 are each fixed to the corresponding gear mechanism, for example protruding along an extension axis of each rotary shaft 9, 11. The track groove 20 may have a curved or bent form, and is provided with one or more viewing windows for viewing the position of the sliding pin. By viewing the position of the sliding pin, a state of the air flap may be judged. By moving the sliding pin 8, 10 to different positions in the track groove 20, the air flap 1, 2 may be opened and closed, and switching of different modes may be achieved.

As shown in Fig. 4, the casing 201 comprises a positioning element 14, 15 arranged on the main housing 202, and the positioning element is slidably supported on the rod member 4. As shown in Fig. 3, the positioning element 14, 15 is arranged between the rod member 4 and the main housing 202. Referring to Fig. 4, the positioning element 14, 15 may have a pin form. In addition, the positioning elements 14, 15 are respectively arranged near the rotary shafts 9, 11, and by a certain distance.

As shown in Fig. 5, a positioning groove 18, 19 that receives the positioning element 14, 15 is provided on the rod member 4. Specifically, the positioning groove 18 is used for receiving the positioning element 14, and the positioning groove 19 is used for receiving the positioning element 15. The positioning groove 18, 19 may extend along an extension axis A of the rod member 4. For example, the positioning groove 18, 19 is arranged at two opposite side edges of the rod member 4 in a direction that is perpendicular to the extension axis A of the rod member 4. In this way, the rod member 4 is supported more stably when sliding.

By providing a positioning element and a positioning groove, not only can the rod member be supported when the rod member slides, but also the rod member can be prevented from moving in a plane that is substantially parallel to a side wall of the main housing.

As shown in Figs. 3 to 4, the air conditioning module 200 further comprises a drive wheel 5; the drive wheel 5 is rotatably arranged on the main housing 202, and is in transmission connection with the rod member 4, to drive the rod member 4 to slide on the main housing 202. The drive wheel 5 is connected to an electric motor output shaft 6 and is able to rotate under the drive of the electric motor output shaft 6. For example, the drive wheel 5 comprises an axle 7, and the axle 7 is connected to the electric motor output shaft 6.

Further referring to Figs. 3 to 4, the casing 201 is provided with a casing limiting part 12, 13 that is arranged on the main housing 202, and the casing limiting part 12, 13 slidably abuts the rod member 4. The casing limiting part and the drive wheel 5 are respectively arranged on two sides of the rod member 4, to clamp the rod member 4, as shown in Fig. 3. Two casing limiting parts are shown, to stably limit the long rod member 4. Of course, another number of casing limiting parts may be provided, even only one casing limiting part in a scenario in which the rod member is shorter. By providing a casing limiting part, the rod member may be further prevented from moving in a plane that is substantially parallel to a side wall of the main housing, in particular in a direction that is transverse to the extension axis of the rod member.

As shown in Fig. 4, the drive wheel 5 and at least two of the casing limiting parts 12, 13 are respectively located at three vertices of a triangle T; the triangle T is shown by a dotted line in the figure. In this way, it is ensured that a position of the rod member 4 is limited during sliding thereof, ensuring that the rod member 4 does not leave a path thereof.

As shown in Fig. 5, the rod member 4 is provided with a rack part 16, and the rack part 16 is provided with teeth 23 that engage with the drive wheel 5. By means of teeth 23 that mesh with the gear 21 of the drive wheel 5, the rod member 4 is able to translationally slide.

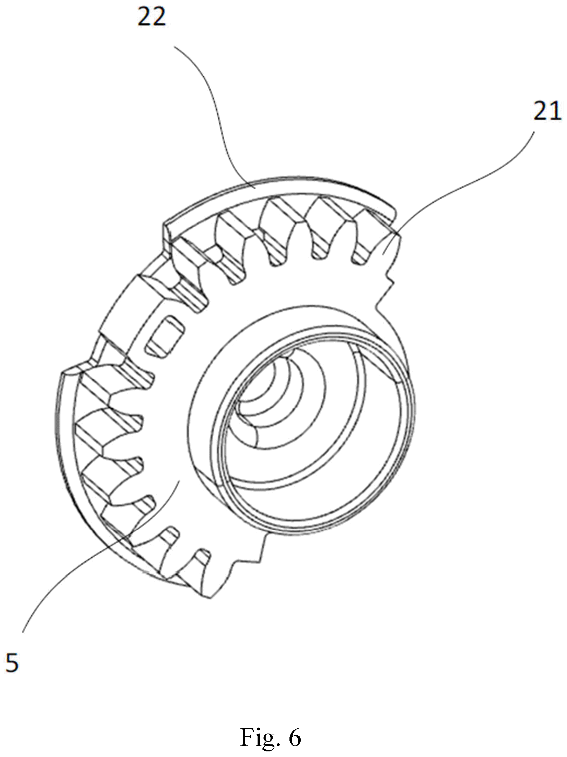

As shown in Fig. 6, the drive wheel 5 is provided with a wheel limiting part 22, and the rack part 16 is arranged between the main housing 202 and the wheel limiting part 22. As shown in Fig. 4, the wheel limiting part 22 is used for abutting the rack part 16 in a direction toward the main housing 202. For example, the wheel limiting part 22 is a protruding part that extends radially from an outer edge of the drive wheel 5. In this way, the rod member may be prevented from moving in a direction away from the main housing.

As shown in Fig. 4, at least one casing limiting part 13 of the casing limiting parts 12, 13 comprises an L-shaped element, one arm of the L-shaped element being connected to the main housing 202, and the other arm, outside the main housing 202, being hooked onto the rod member 4 in a direction toward the main housing 202. Specifically, the other arm obstructs the rod member in a direction away from the main housing, so as to prevent the rod member from moving away from the main housing by acting together with the wheel limiting part 22 at two sides of the rod member 4, respectively.

As described above, the air conditioning module of the present disclosure achieves air flap driving and mode switching by means of a simple mechanical structure, and is therefore structurally compact and has lower space requirements.

The vehicle of the present disclosure comprises the air conditioning module 200 described above. The vehicle may be a motor vehicle or an electric vehicle. The vehicle of the present disclosure thus also has the advantages described above in relation to the air conditioning module.

In addition, the technical features disclosed above are not limited to combinations of the disclosed features with other features, and those skilled in the art could combine technical features in other ways according to the objective of the invention, to realize the objective of the present disclosure.

## Claims

1. An air conditioning module (200), comprising a casing (201) and an air flap (1, 2), the casing (201) comprising a main housing (202); a rotary shaft (9, 11) of the air flap (1, 2) is rotatably arranged on the main housing (202); the air conditioning module (200) further comprises:
a rod member (4), which is slidably arranged on the main housing (202);
and a driven member, which is arranged on the rotary shaft (9, 11) of the air flap (1, 2); the driven member is slidably joined to the rod member (4), so as to be driven by the rod member (4) when the rod member (4) slides, thereby driving the air flap (1, 2) to rotate on the main housing (202).

2. The air conditioning module (200) as claimed in claim 1, **characterized in that** the rod member (4) is provided with a track groove (20), and the driven member comprises a sliding pin (8, 10) that is able to slide in the track groove, and the sliding pin (8, 10) is fixed to the rotary shaft (9, 11) of the air flap (1, 2).

3. The air conditioning module (200) as claimed in claim 1, **characterized in that** the casing (201) comprises a positioning element (14, 15) that is arranged on the main housing (202), and the positioning element is slidably supported on the rod member (4), wherein the positioning element (14, 15) is arranged between the rod member (4) and the main housing (202).

4. The air conditioning module (200) as claimed in claim 3, **characterized in that** a positioning groove (18, 19) that receives the positioning element (14, 15) is provided on the rod member (4).

5. The air conditioning module (200) as claimed in claim 4, **characterized in that** the positioning groove (18, 19) extends along an extension axis (A) of the rod member (4).

6. The air conditioning module (200) as claimed in claim 4, **characterized in that** the positioning groove (18, 19) is arranged at two opposite side edges of the rod member (4) in a direction that is perpendicular to the extension axis (A) of the rod member (4).

7. The air conditioning module (200) as claimed in claim 1, **characterized in that** the air conditioning module (200) further comprises a drive wheel (5); the drive wheel (5) is rotatably arranged on the main housing (202), and is in transmission connection with the rod member (4), to drive the rod member (4) to slide on the main housing (202).

8. The air conditioning module (200) as claimed in claim 7, **characterized in that** the casing (201) is provided with a casing limiting part (12, 13) that is arranged on the main housing (202), and the casing limiting part slidably abuts the rod member (4), wherein the casing limiting part (12, 13) and the drive wheel (5) are respectively arranged at two sides of the rod member (4), to clamp the rod member (4).

9. The air conditioning module (200) as claimed in claim 8, **characterized in that** the drive wheel (5) and at least two of the casing limiting parts (12, 13) are respectively located at three vertices of a triangle (T).

10. The air conditioning module (200) as claimed in claim 7, **characterized in that** the rod member (4) is provided with a rack part (16), and the rack part (16) is provided with teeth (23) that engage with the drive wheel (5).

11. The air conditioning module (200) as claimed in claim 7, **characterized in that** the drive wheel (5) is provided with a wheel limiting part (22), and the rack part (16) is arranged between the main housing (202) and the wheel limiting part (22); the wheel limiting part (22) is used for abutting the rack part (16) in a direction toward the main housing (202).

12. The air conditioning module (200) as claimed in claim 8, **characterized in that** at least one of the casing limiting parts (12, 13) comprises an L-shaped element, one arm of the L-shaped element being connected to the main housing (202), and the other arm, outside the main housing (202), being hooked onto the rod member (4) in a direction toward the main housing (202).

13. The air conditioning module (200) as claimed in claim 11, **characterized in that** the wheel limiting part (22) is a protruding part that extends radially from an outer edge of the drive wheel (5).

14. A vehicle, **characterized in that** the vehicle comprises the air conditioning module (200) as claimed in any one of claims 1 to 13.
